# EUROPÄISCHE PATENTSCHRIFT

(11) **EP 4 710 760 B1**
(45) Veröffentlichungstag und Bekanntmachung des Hinweises auf die Patenterteilung: **17.06.2026**
(21) Anmeldenummer: 24200738.3
(22) Anmeldetag: 17.09.2024
(51) Int. Cl.: A01M 1/02, A01M 31/00

(54) **ERKENNEN EINES EREIGNISSES BEI EINER VORRICHTUNG ZUR ÜBERWACHUNG VON GLIEDERFÜSSERN**
DETECTING AN EVENT IN A DEVICE FOR MONITORING ARTHROPODS
DÉTECTION D'UN ÉVÉNEMENT DANS UN DISPOSITIF DE SURVEILLANCE DES ARTHROPODES

(43) Veröffentlichungstag der Anmeldung: 18.03.2026
(73) Patentinhaber: Bayer Aktiengesellschaft, 51373 Leverkusen (DE)
(72) Erfinder: BORN, Fabian Christian, 57319 Berleburg (DE); TEMPEL, Matthias, 50935 Köln (DE)
(74) Vertreter: BIP Patents

(56) Entgegenhaltungen:
- WO-A1-2024/261128
- WO-A1-2024/261150
- US-A1- 2019 220 632

## Beschreibung

### TECHNISCHES GEBIET

Die vorliegende Offenbarung befasst sich mit dem Überwachen von Gliederfüßern auf Basis von Bildaufnahmen.

Gegenstände der vorliegenden Offenbarung sind ein computer-implementiertes Verfahren, eine Vorrichtung und ein Computerprogramm.

### EINLEITUNG

US2019/220632A1 offenbart ein drahtloses Überwachungsgerät für eine Schädlings- oder Tierfalle.

WO2024/261128A1 offenbart ein Gerät zur Schädlingserkennung und -bekämpfung, ein Schädlingsbekämpfungssystem und ein Verfahren zur Schädlingserkennung durch Betrieb des Schädlingbekämpfungssystems.

WO2024/261150A1 offenbart ein Gerät zur Schädlingsbekämpfung, ein System zur Schädlingsbekämpfung und ein Verfahren zum Anlocken von Schädlingen.

WO2020/058175A1 offenbart ein Verfahren, eine Vorrichtung und ein Computerprogramm zum Detektieren von Gliederfüßern. Die Vorrichtung umfasst eine Kamera, mit der eine Bildaufnahme eines Sammelbereichs, in dem sich ein oder mehrere Gliederfüßer aufhalten, erzeugt wird. Die Vorrichtung umfasst eine Sendeeinheit, mit der die Bildaufnahme über ein Netzwerk an ein Computersystem gesandt wird. Auf dem Computersystem kann die Bildaufnahme durch einen Nutzer und/oder automatisiert analysiert werden, z.B. um Gliederfüßer in der Bildaufnahme zu detektieren, zu identifizieren und/oder zu zählen.

Die Vorrichtung ist für den Betrieb in einem Feld für Kulturpflanzen hergerichtet. Für einen autonomen Betrieb der Vorrichtung im Freien weist die Vorrichtung zur Versorgung ihrer elektronischen Komponenten mit elektrischer Energie eine Energieversorgungseinheit wie beispielsweise eine elektrochemische Zelle, einen Akkumulator und/oder eine Solarzelle auf. Energiemanagement spielt bei einer solchen Vorrichtung eine wichtige Rolle; es ist das Ziel, eine solche Vorrichtung autonom über einen langen Zeitraum von mehreren Tagen, Wochen, Monaten oder sogar Jahren zum Überwachen von Gliederfüßern einzusetzen, ohne dass beispielsweise elektrochemische Zellen erneuert werden müssen.

Da die Vorrichtung üblicherweise im Freien betrieben wird, besteht die Gefahr, dass die Vorrichtung durch natürliche Ereignisse wie Wind, Regen oder Tiere in einen Zustand versetzt wird, in dem der ordnungsgemäße Betrieb der Vorrichtung nicht mehr gewährleistet ist.

Es besteht die Gefahr, dass die Vorrichtung durch eine nicht autorisierte Person entwendet (z.B. gestohlen) wird.

Ferner ist es möglich, dass die Vorrichtung zwischen zwei Bildaufnahmen gereinigt wurde. Wird die Reinigung nicht bei der Analyse von Bildaufnahmen berücksichtigt, kann dies zu falschen Schlüssen führen. Zeigt die erste Bildaufnahme vor der Reinigung eine Zahl an Gliederfüßern im Sammelbereich und die zweite Bildaufnahme nach der Reinigung beispielsweise die gleiche Zahl, könnte gefolgert werden, dass in der Zeit zwischen der ersten Bildaufnahme und der zweiten Bildaufnahme keine Gliederfüßer in den Sammelbereich gelangt sind. Wurden jedoch bei der Reinigung alle Gliederfüßer entfernt, ist nach der Reinigung die gleiche Zahl an Gliederfüßern in den Sammelbereich gelangt, wie vor der Reinigung in dem Sammelbereich vorhanden war.

### ZUSAMMENFASSUNG

Diesen und weiteren Aspekten widmet sich die vorliegende Offenbarung.

Gegenstand der vorliegenden Offenbarung ist eine Vorrichtung zum Überwachen von Gliederfüßern umfassend
- eine Kamera, wobei die Kamera konfiguriert ist, eine Bildaufnahme von einem Sammelbereich zu erzeugen,
- eine Sendeinheit zum Übermitteln von Informationen an ein separates Computersystem,
- einen Sensor,
- eine Steuereinheit,
   wobei die Steuereinheit konfiguriert ist,
- in einem Ruhezustand ein Signal von dem Sensor zu empfangen, wobei das Signal eine Bewegung und/oder Lageänderung der Vorrichtung anzeigt,
- in dem Ruhezustand das Signal einem Ereignis zuzuordnen,
- in Reaktion auf die Zuordnung des Signals zu dem Ereignis die Vorrichtung aus dem Ruhezustand in einen Aktivzustand zu versetzen.

### KURZE BESCHREIBUNG DER ZEICHNUNGEN

Fig. 1 zeigt eine Ausführungsform des computer-implementierten Verfahrens der vorliegenden Offenbarung in Form eines Ablaufschemas.
Fig. 2 zeigt beispielhaft und schematisch eine Ausführungsform der Vorrichtung der vorliegenden Offenbarung.

### AUSFÜHRLICHE OFFENBARUNG

Wenn in der vorliegenden Beschreibung oder in den Ansprüchen Schritte in einer Reihenfolge angegeben sind, bedeutet dies nicht unbedingt, dass die Offenbarung auf die angegebene Reihenfolge beschränkt ist. Vielmehr ist es denkbar, dass die Schritte auch in einer anderen Reihenfolge oder auch parallel zueinander ausgeführt werden können, es sei denn, dass zum Beispiel ein Schritt auf einem anderen aufbaut, was erfordert, dass der aufbauende Schritt anschließend ausgeführt wird (dies wird aber im Einzelfall klar). Die angegeben Reihenfolgen sind somit beispielhafte Ausführungsformen der vorliegenden Offenbarung.

Die Gegenstände der vorliegenden Offenbarung werden an einigen Stellen in Bezug auf Zeichnungen näher erläutert. Dabei sind in den Zeichnungen konkrete Ausführungsformen mit konkreten Merkmalen und Merkmalskombinationen dargestellt, die in erster Linie der Veranschaulichung dienen; die vorliegende Offenbarung soll nicht so verstanden werden, dass sie auf die in den Zeichnungen dargestellten Merkmale und Merkmalskombinationen beschränkt ist. Ferner sollen Aussagen, die bei der Beschreibung der Zeichnungen in Bezug auf Merkmale und Merkmalskombinationen getroffen werden, allgemein gelten, das heißt auch auf andere Ausführungsformen übertragbar und nicht auf die gezeigten Ausführungsformen beschränkt sein.

Der Artikel "ein" bedeutet "ein oder mehrere"; es sei denn es steht ein "nur" oder "leidglich" davor. Dies gilt analog auch für den Artikel "eine".

Die Ausdrücke "basierend auf" und "auf Basis von" bedeuten "zumindest teilweise basierend auf", sofern nicht ausdrücklich etwas anderes angegeben ist.

Der Begriff "oder" ist nicht als exklusives "oder" zu verstehen, d.h. der Ausdruck "A oder B" umfasst "A", "B" sowie "A und B".

Ansonsten haben die in dieser Offenbarung verwendeten Begriffe die Bedeutung, die sie im Stand der Technik, insbesondere in dem in dieser Offenbarung angeführten Stand der Technik haben.

Ein Gegenstand der vorliegenden Offenbarung ist eine Vorrichtung zum Überwachen von Gliederfüßern.

"Gliederfüßer" (Arthropoden) sind eine vielfältige Gruppe wirbelloser Tiere, die zum Stamm der Arthropoda gehören.

Gliederfüßer spielen in Ökosystemen eine wichtige Rolle als Bestäuber, Zersetzer und/oder als Teil des Nahrungsnetzes. Sie können auch von wirtschaftlicher Bedeutung sein, sowohl zum Nutzen (z.B. Bestäubung, Seidenproduktion) als auch zum Nachteil (z.B. als Schädlinge in der Landwirtschaft, Überträger von Krankheiten).

Gliederfüßer werden in mehrere Gruppen (Subphyla und Klassen) eingeteilt, darunter Insekten und Spinnentiere.

In einer Ausführungsform der vorliegenden Offenlegung bezieht sich der Begriff "Gliederfüßer" ausschließlich auf Insekten und Spinnentiere.

In einer anderen Ausführungsform der vorliegenden Offenbarung bezieht sich der Begriff "Gliederfüßer" ausschließlich auf Insekten.

In einer anderen Ausführungsform der vorliegenden Offenbarung bezieht sich der Begriff "Gliederfüßer" ausschließlich auf erwachsene Insekten.

In einer anderen Ausführungsform der vorliegenden Offenbarung bezieht sich der Begriff "Gliederfüßer" ausschließlich auf Insekten in Form von Raupen.

In einer anderen Ausführungsform der vorliegenden Offenbarung bezieht sich der Begriff "Gliederfüßer" ausschließlich auf Spinnentiere.

In einer anderen Ausführungsform der vorliegenden Offenbarung bezieht sich der Begriff "Gliederfüßer" ausschließlich auf Milben.

Der Begriff "Überwachen" bedeutet üblicherweise, dass mit Hilfe der Vorrichtung die Anwesenheit eines oder mehrerer Gliederfüßer in einem Bereich (z.B. in einem Feld für den Anbau von Kulturpflanzen) festgestellt werden kann.

Die Vorrichtung weist Mittel zum Erzeugen von Bildaufnahmen auf. Dabei handelt es sich üblicherweise um eine oder mehrere Kameras.

Eine "Kamera" ist ein Gerät oder System, das dazu bestimmt ist, Bildaufnahmen von externen Objekten und Phänomenen zu erfassen und aufzuzeichnen. Eine Kamera nutzt dazu beispielsweise elektromagnetische Strahlung, Schallwellen oder andere physikalische Vorgänge, die visuell dargestellt werden können. Die Kamera wandelt empfangene Signale (z.B. optische oder akustische) in andere Signale (z.B. elektrische) oder Daten um, die gespeichert, verarbeitet, angezeigt und/oder übertragen werden können. Der Begriff "Kamera" umfasst Geräte, die mit allen Medien oder Technologien arbeiten, einschließlich analoger und digitaler, optischer, elektronischer, chemischer oder anderer Methoden der Bilderfassung. Der Begriff "Kamera" umfasst ein breites Spektrum von Geräten einschließlich, aber nicht beschränkt auf Fotokameras, Videokameras, Wärmebildkameras, Radarsysteme, Ultraschall-Bildgebungsgeräte, Elektronenmikroskope und alle künftigen Technologien, die die Funktion der Bilderfassung erfüllen können.

In einer Ausführungsform der vorliegenden Offenbarung ist die Kamera eine Digitalkamera, die mit Hilfe eines oder mehrerer Bildsensoren zweidimensionale Abbilder aus Licht auf elektrischem Weg erzeugt. Üblicherweise handelt es sich um halbleiterbasierte Bildsensoren wie beispielsweise CCD-(CCD *= charge-coupled device*) oder CMOS-Sensoren (CMOS *= complementary metal-oxidesemiconductor*)*.* Optische Elemente wie Linsen, Blenden und dergleichen dienen einer möglichst scharfen Abbildung von Gliederfüßern im Sammelbereich auf dem Bildsensor. Eine Digitalkamera ist konfiguriert, digitale Bildaufnahmen zu erzeugen.

Digitale Bildaufnahmen können mit Computersystemen und Computerprogrammen verarbeitet, bearbeitet und reproduziert sowie in standardisierte Datenformate konvertiert werden, wie zum Beispiel JPEG (Grafikformat der Joint Photographic Experts Group), PNG (Portable Network Graphics) oder SVG (Scalable Vector Graphics). Digitale Bildaufnahmen können mit geeigneten Anzeigegeräten visualisiert werden, wie zum Beispiel mit Computermonitoren, Projektoren und/oder Druckern.

Die mindestens eine Kamera ist auf einen Sammelbereich gerichtet. Mit anderen Worten: die Kamera ist so ausgerichtet und konfiguriert, dass sie Bildaufnahmen von dem Sammelbereich oder einem Teil davon erzeugt.

Der Sammelbereich ist ein Bereich, der von Gliederfüßern aufgesucht werden kann. Es kann sich dabei um eine ebene Oberfläche einer Tafel oder Karte oder dergleichen handeln. Es kann sich auch um den Boden eines Behälters handeln. Es kann sich auch um eine Flüssigkeit in einem Behälter handeln. Es kann sich auch um einen Teil einer Pflanze handeln, beispielsweise ein Blatt oder eine Frucht oder ein anderer Teil einer Pflanze.

Der Sammelbereich kann ein Bestandteil der Vorrichtung sein oder davon unabhängig sein.

In einer Ausführungsform der vorliegenden Offenbarung ist der Sammelbereich ein Teil einer Fangvorrichtung für Gliederfüßer. Die Fangvorrichtung kann ein Bestandteil der Vorrichtung sein oder davon unabhängig sein.

In einer Ausführungsform der vorliegenden Offenbarung umfasst die Fangvorrichtung einen mit einer Flüssigkeit gefüllten Behälter, z.B. eine Fangschale, wie sie in WO2020/058175A1, WO2020/058170A1, WO2021/213824A1 oder WO2022/243150A1 beschrieben ist.

In einer Ausführungsform der vorliegenden Offenbarung umfasst die Fangvorrichtung eine mit einem Klebemittel versehene Oberfläche, wie sie in beispielsweise in WO2023/043871A1, WO2018/131853A1 oder WO2004/095919A2 beschrieben ist.

In einer Ausführungsform der vorliegenden Offenbarung umfasst die Fangvorrichtung einen zeltartigen Rahmen, der einen Innenraum definiert, in den Gliederfüßer gelangen können. Solche Fangvorrichtungen sind auch unter der Bezeichnung Delta-Falle bekannt (siehe z.B. WO2018/078638A1); sie können jedoch andere Formen als die Form eines Prismas aufweisen.

Als Lockmittel kann der Sammelbereich in einer Farbe gestaltet sein (z.B. gelb oder rot), die spezifische Gliederfüßer anlockt. Neben oder anstelle einer Farbe können weitere/andere Mittel vorhanden sein, die Gliederfüßer anlocken (Lockmittel). Denkbar ist zum Beispiel die Verwendung eines Pheromons oder eines Duftstoffes, der z.B. eine Nahrungsquelle vortäuscht. Auch der Einsatz einer Quelle für elektromagnetische Strahlung im infraroten, sichtbaren und/oder ultravioletten Bereich zum Anlocken von (spezifischen) Gliederfüßern ist denkbar. Auch der Einsatz von Geräuschen, die beispielsweise paarungswillige Männchen und/oder Weibchen imitieren, ist denkbar. Auch der Einsatz von speziellen Mustern, die zum Beispiel eine Pflanze imitieren, ist denkbar.

Im Falle der Verwendung eines mit einer Flüssigkeit gefüllten Behälters kann dieser mit Wasser und optional mit einem oder mehreren Zusätzen gefüllt sein. Ein solcher Zusatz kann beispielsweise ein Tensid zur Erniedrigung der Oberflächenspannung sein. Ein solcher Zusatz kann auch ein Lockstoff zum Anlocken von (spezifischen) Gliederfüßern sein. Ein solcher Zusatz kann auch ein Mittel zur Verhinderung von Algenbildung (beispielsweise ein Herbizid) sein.

Im Falle einer Karte oder Tafel kann diese mit einem Klebemittel versehen sein, um Gliederfüßer bewegungsunfähig zu machen.

Die Vorrichtung umfasst eine Sendeeinheit, um Informationen über ein Netzwerk an ein separates Computersystem zu übermitteln. Diese Informationen können beispielsweise Bildaufnahmen des Sammelbereichs sein. Diese Informationen können Ergebnisse einer Analyse einer Bildaufnahme sein, zum Beispiel die Zahl der in einer Bildaufnahme abgebildeten Gliederfüßer, identifizierte Spezies und/oder Mitteilungen zum Status der Vorrichtung.

Die Sendeeinheit kann so ausgestaltet sein, dass sie Informationen über ein Mobilfunknetz (z.B. GSM: *Global System for Mobile Communications,* GPRS: *General Packet Radio Service;* UMTS: *Universal Mobile Telecommunications System,* LTE: *Long Term Evolution*), über ein WLAN (*Wireless Local Artea Network*)*,* über Bluetooth, über DECT (*Digital Enhanced Cordless Telecommunications*) über ein Low-Power-Wide-Area-Netzwerk (*Low Power Wide Area Network* (LPWAN oder LPN)) wie beispielsweise ein NarrowBand IoT Netzwerk und/oder über eine Kombination aus verschiedenen Übertragungswegen übermittelt.

Die Sendeeinheit kann so ausgestaltet sein, dass sie Informationen über eine kurzreichweitige Funkverbindung (z.B. Bluetooth) an eine Basisstation übermittelt, von der die Informationen dann kabelgebunden und/oder über eine langreichweitige Funkverbindung (z.B. ein Mobilfunknetz) weitergeleitet werden.

In einer Ausführungsform der vorliegenden Offenbarung umfasst die Sendeeinheit ein Modem und eine Antenne zum Versenden von Informationen über ein GSM-, GPRS-, 2G-, 3G-, LTE-, 4G-, 5G-, 6G-Mobilfunknetzwerk oder über ein anderes Mobilfunknetzwerk.

Die Vorrichtung weist Mittel zur Energieversorgung auf. Die Vorrichtung ist für einen autonomen Betrieb im Freien für einen Zeitraum von mehreren Tagen, Wochen, Monaten oder sogar Jahren hergerichtet. Die Mittel zur Energieversorgung umfassen z.B. eine oder mehrere elektrochemischen Zellen, Akkumulatoren, Solarzellen, Brennstoffzellen und/oder Generatoren (z.B. in Kombination mit einem Windrad).

Die Vorrichtung kann so ausgestaltet sein, dass es elektrische Energie aus der Umgebung der Vorrichtung gewinnt. Die Energie aus der Umgebung kann beispielsweise in Form von Licht, elektrischen Feldern, magnetischen Feldern, elektromagnetischen Felder, Bewegung, Druck und/oder Wärme und/oder anderen Energieformen bereitgestellt und durch die Vorrichtung genutzt oder "geerntet" werden. Diese Art der elektrischen Energieerzeugung ist als Energy Harvesting bekannt. Mit "Energy Harvesting" werden im Bereich der Elektronik Verfahren bezeichnet, mit denen kleinste Mengen frei verfügbarer Energie aus der Umgebung gewonnen und gespeichert werden können. Diese Technik ermöglicht es, eine Vorrichtung während ihrer gesamten Lebensdauer mit Energie zu versorgen. Energy Harvesting Systeme umfassen üblicherweise einen Energiewandler, eine Energiemanagementeinheit mit einem Energiespeicher, der üblicherweise ein Kondensator ist. Der Energiewandler, auch Mikrogenerator genannt, wandelt Energie aus der Umgebung in elektrische Energie um. Für die Umwandlung können beispielsweise der piezoelektrische Effekt, der thermoelektrische Effekt oder der photoelektrische Effekt genutzt werden. Weitere Details sind im Stand der Technik beschrieben (siehe z.B. http://www.harvesting-energy.de/ und die dort aufgeführten Publikationen).

In einer Ausführungsform umfasst die Vorrichtung eine oder mehrere Solarzellen und einen oder mehrere Akkumulatoren zur Energieversorgung. Die mindestens eine Solarzelle und der mindestens eine Akkumulator sind so miteinander verbunden, dass die Solarzelle den Akkumulator auflädt, wenn elektromagnetische Strahlung (z.B. Sonnenlicht) auf die mindestens eine Solarzelle trifft.

Die Vorrichtung umfasst ferner eine Steuereinheit.

Die Steuereinheit dient der Steuerung der elektrischen/elektronischen Komponenten der Vorrichtung und/oder zum Empfang von Signalen und/oder Daten. Die Steuereinheit umfasst üblicherweise eine Prozessoreinheit, einen Programmspeicher und einen Arbeitsspeicher. Die Steuereinheit kann ferner einen nicht-flüchtigen Datenspeicher umfassen, der vorzugsweise als Halbleiterspeicher ausgeführt ist, und der zum Beispiel zum Speichern von Bildaufnahmen, Messwerten und/oder von Ergebnissen von Analysen dienen kann. Die Steuereinheit kann konfiguriert sind, mit Hilfe eines GPS-Empfängers die Position der Vorrichtung zu bestimmen. Die Steuereinheit kann konfiguriert sein, mit Hilfe der Kamera Bildaufnahmen vom Sammelbereich zu erzeugen. Die Steuereinheit kann konfiguriert sein, Bildaufnahmen, Messwerte, Analysenergebnisse, Geokoordinaten und/oder andere Informationen mit Hilfe der Sendeeinheit an ein separates Computersystem zu übermitteln. Die Steuereinheit kann konfiguriert sein, mit Hilfe eines oder mehrerer Sensoren eine Bewegung und/oder Lageänderung der Vorrichtung zu erfassen.

In einer Ausführungsform der vorliegenden Offenbarung ist die Steuereinheit konfiguriert, zwischen mindestens zwei Zuständen zu wechseln, einem Ruhezustand (engl. *sleep mode*) und einem Aktivzustand (engl. *active mode* oder *fully operational mode*)*.*

Der "Ruhezustand" ist ein Zustand mit geringer Leistungsaufnahme (im Vergleich zum Aktivzustand), in den die Vorrichtung versetzt werden kann, um Energie zu sparen, aber dennoch in der Lage zu sein, bei Bedarf schnell wieder den vollen Betrieb aufzunehmen. Im Ruhezustand hält die Vorrichtung ihre Funktionen an und reduziert den Stromverbrauch verschiedener Komponenten wie Prozessor, GPS-Empfänger, Kamera, Statusanzeigen, Beleuchtung und anderer ggf. vorhandener Peripheriegeräte und/oder Bestandteile, lässt aber die Verbindung mit einem oder mehreren Sensoren eingeschaltet, um auf ein oder mehrere Signale des einen oder der mehreren Sensoren reagieren zu können. Dieser Modus ist vor allem bei der autonom betriebenen Vorrichtung nützlich, um den Stromverbrauch zu reduzieren.

Der Begriff "Aktivzustand" bezieht sich auf den Betriebszustand, in dem die Vorrichtung vollständig mit Strom versorgt wird, Aufgaben ausführt, Anwendungen laufen lässt und Prozesse entsprechend den vordefinierten Programmieranweisungen durchführt. Im aktiven Modus sind alle oder nahezu alle Komponenten des Systems, einschließlich der Prozessoreinheit, des Arbeitsspeichers, der Speichergeräte, der Anzeigeeinheiten und der Peripherieschnittstellen, mit Strom versorgt und arbeiten mit den ihnen zugewiesenen Kapazitäten. In diesem Modus kann das System alle Funktionen von der Datenverarbeitung und Softwareausführung bis hin zur Benutzerinteraktion und Netzkommunikation ausführen. Der Aktivzustand unterscheidet sich deutlich vom Ruhezustand, bei dem die Vorrichtung ihren Energieverbrauch reduziert, indem es den Betrieb seiner nicht unbedingt erforderlichen Komponenten teilweise oder vollständig aussetzt und gleichzeitig ein minimales Energieniveau beibehält, um den Systemzustand für eine schnelle Reaktivierung zu erhalten.

Die Vorrichtung der vorliegenden Offenbarung umfasst ferner einen oder mehrere Sensoren zum Erfassen einer Bewegung und/oder Lageänderung der Vorrichtung.

Die Vorrichtung wird üblicherweise ortsfest, z.B. in einem Feld für den Anbau von Kulturpflanzen, betrieben. Mit anderen Worten, die Position und Lage der Vorrichtung ändert sich nicht, wenn die Vorrichtung installiert und/oder aufgestellt und/oder in Betrieb genommen worden ist. Eine Bewegung und/oder Lageänderung der Vorrichtung kann auf ein unerwünschtes Ereignis hindeuten, z.B. darauf, dass die Vorrichtung umgefallen und/oder heruntergefallen und/oder umgestoßen und/oder unerlaubt entwendet worden ist. Eine Bewegung und/oder Lageänderung der Vorrichtung kann darauf hindeuten, dass eine Wartung an der Vorrichtung vorgenommen wurde. Eine Wartung kann eine Prüfung einer oder mehrerer Komponenten sein oder umfassen. Eine Wartung kann ein Austausch einer oder mehrerer Komponenten sein oder umfassen, wie beispielsweise der Austausch einer Klebefläche und/oder ein Nachfüllen oder Austauschen einer Flüssigkeit zum Immobilisieren von Gliederfüßern in einem Fangbehälter. Eine Wartung kann eine Reinigung sein oder umfassen, wie beispielsweise die Reinigung eines Fangbehälters oder eines anderen Sammelbereichs. Mit Hilfe eines oder mehrerer Sensoren zum Erfassen einer Bewegung und/oder Lageänderung können ein oder mehrere solcher Ereignisse erkannt werden.

In einer Ausführungsform ist der mindestens eine Sensor ein mikro-elektromechanisches System (Abk. MEMS) oder ein Teil davon. Mikro-Elektro-Mechanische Systeme (MEMS) sind integrierte Systeme, die mechanische und elektrische Komponenten im Mikromaßstab kombinieren, in der Regel im Bereich von einigen Mikrometern bis zu einem Millimeter. Diese Systeme nutzen die Grundsätze der Mikrofabrikation, um komplexe Geräte zu schaffen, die eine Vielzahl mechanischer und elektrischer Funktionen ausführen können. Die MEMS-Technologie integriert Komponenten wie Sensoren, ggf. Aktoren und Elektronik auf einem gemeinsamen Siliziumsubstrat durch Mikrofabrikationstechnologie.

Ein Vorteil von MEMS ist ihre geringe Größe, die die Entwicklung von kompakten und leichten Geräten ermöglicht. MEMS benötigen in der Regel weniger Energie für den Betrieb als konventionelle Geräte.

Die mikroskopische Größe von MEMS ermöglicht eine hohe Präzision und Empfindlichkeit. Die Fähigkeit zur Massenproduktion von MEMS-Bauteilen unter Verwendung von Batch-Fertigungstechniken, die denen in der Halbleiterindustrie ähneln, führt zu Skaleneffekten, die MEMS-Bauteile für eine breite Palette von Anwendungen kosteneffizient machen. Die MEMS-Technologie ermöglicht die Integration mechanischer und elektrischer Komponenten auf einem einzigen Chip, wodurch die Größe und Komplexität von Systemen erheblich reduziert werden kann, was zu einer verbesserten Leistung, Zuverlässigkeit und Funktionalität führt.

Der mindestens eine Sensor kann ein Beschleunigungsmesser sein und/oder einen solchen umfassen.

Ein Beschleunigungsmesser ist ein Sensor, der nicht-gravitative Beschleunigungskräfte misst. Das Messprinzip eines Beschleunigungsmessers kann z.B. auf dem Prinzip der Massenverschiebung beruhen. Eine kleine Prüfmasse kann auf einer Mikroskala im Sensor verankert sein. Diese Masse kann mit einem mechanischen Aufhängungssystem verbunden sein, das ihre Bewegung ermöglicht. Ein Dämpfungssystem kann bei der Stabilisierung der Bewegung der Masse behilflich sein. Ein elektrisches Bauteil kann die mechanische Bewegung der Masse in ein elektrisches Signal umwandeln, das von der Steuereinheit empfangen und interpretiert werden kann. Wenn ein Beschleunigungsmesser einer Beschleunigung ausgesetzt wird, bewegt sich die Prüfmasse im Inneren des Sensors aufgrund des zweiten Newtonschen Bewegungsgesetzes proportional zu der auf sie ausgeübten Kraft. Diese Bewegung ist relativ zum Rest des Sensors. Durch die Verschiebung der Masse werden die Federn, an denen sie befestigt ist, gedehnt oder zusammengedrückt. Diese Verschiebung kann sehr klein sein, oft im Mikro- oder Nanobereich. Die Bewegung der Masse aufgrund der Beschleunigung führt zu einer Änderung einer Eigenschaft im Beschleunigungsmesser (z.B. Kapazität, Widerstand und/oder piezoelektrischer Effekt), die elektrisch gemessen werden kann. Bei kapazitiven Beschleunigungssensoren beispielsweise verändert die Verschiebung der Masse die Kapazität zwischen zwei Kondensatorplatten, die gemessen und in ein elektrisches Signal umgewandelt werden kann. Das elektrische Signal kann dann von der Steuereinheit verarbeitet und interpretiert und in eine Messung der Beschleunigung umgewandelt werden. Diese Daten können verwendet werden, um die Ausrichtung der Vorrichtung relativ zur Erdoberfläche zu bestimmen, Bewegungen zu erkennen und/oder Vibrationen zu erfassen.

Der mindestens eine Sensor kann ein Gyroskop sein und/oder ein solches umfassen.

Ein Gyroskop ist ein Sensor zur Messung der Orientierung und/oder Winkelgeschwindigkeit. Es funktioniert nach dem Prinzip des Drehimpulses. Ein traditionelles mechanisches Gyroskop besteht aus einem sich drehenden Rad oder Rotor, das in zwei oder drei Kardanrahmen montiert ist, die es dem Rotor ermöglichen, sich frei in jede Richtung zu drehen. Wenn der Rotor in Drehung versetzt wird, behält er aufgrund der Drehimpulserhaltung seine Ausrichtung bei. Der Drehimpuls ist eine physikalische Größe, die den Impuls eines rotierenden Objekts darstellt, der in einem System erhalten bleibt, solange keine äußere Kraft auf ihn einwirkt. Wenn eine äußere Kraft einwirkt, zeigt das Gyroskop ein Verhalten, das als Präzession bekannt ist: die Drehachse des Gyroskops neigt sich in eine Richtung, die senkrecht zur Richtung der einwirkenden Kraft steht. Dieses Verhalten ermöglicht es dem Gyroskop, Änderungen seiner Ausrichtung zu widerstehen.

MEMS-Gyroskope, die häufig in elektronischen Geräten zu finden sind, verwenden ein anderes Prinzip zur Messung der Winkelgeschwindigkeit, ohne auf einen sich drehenden Rotor angewiesen zu sein. MEMS-Gyroskope bestehen in der Regel aus winzigen vibrierenden Strukturen, die auf einem Chip integriert sind. Diese Strukturen sind so konzipiert, dass sie in eine bestimmte Richtung schwingen. Wenn sich die Vorrichtung (und damit das Gyroskop) dreht, verursacht der Coriolis-Effekt eine sekundäre Schwingung, die orthogonal zur primären Schwingungsrichtung aufgrund der Drehung ist. Der Coriolis-Effekt ist die scheinbare Ablenkung von sich bewegenden Objekten, wenn sie von einem rotierenden Bezugssystem aus betrachtet werden. Die durch den Coriolis-Effekt hervorgerufene Sekundärschwingung wird gemessen; sie ist proportional zur Winkelgeschwindigkeit. Das Messsignal kann in ein elektrisches Signal umgewandelt werden, das von der Steuereinheit interpretiert werden kann.

Ein Gyroskop kann einen Beschleunigungsmesser ergänzen, indem es z.B. die Rotationsrate um drei Hauptachsen der Vorrichtung misst. Dies kann bei der genauen Bestimmung der Ausrichtung der Vorrichtung im dreidimensionalen Raum helfen. In Kombination mit dem Signal eines Beschleunigungsmessers ermöglicht ein Gyroskop eine präzisere Verfolgung von Positions- und Orientierungsänderungen der Vorrichtung.

Der mindestens eine Sensor kann ein Magnetometer sein und/oder ein solches umfassen.

Ein Magnetometer ist ein Sensor, der Magnetfelder und/oder magnetische Dipolmomente misst. Magnetometer werden oft als digitaler Kompass verwendet und können die Stärke und Richtung des Magnetfelds um die Vorrichtung messen. Durch die Erkennung des Erdmagnetfelds können Magnetometer die Ausrichtung der Vorrichtung relativ zur Erdoberfläche bestimmen. Das Magnetometer kann beispielsweise ein Hall-Effekt-Magnetometer sein. Hall-Effekt-Magnetometer arbeiten unter Ausnutzung des Hall-Effekts, der auftritt, wenn ein stromdurchflossener Leiter oder Halbleiter einem senkrechten Magnetfeld ausgesetzt wird. Dadurch wird über dem Leiter eine Spannung (die Hall-Spannung) erzeugt, die orthogonal zum Strom und zum Magnetfeld verläuft. Die Größe dieser Spannung ist proportional zur Stärke des Magnetfelds. Hall-Effekt-Sensoren sind aufgrund ihrer Einfachheit und ihrer direkten Methode zur Messung von Magnetfeldern weit verbreitet.

Der mindestens eine Sensor kann ein Barometer sein und/oder ein solches umfassen.

Barometer sind Luftdrucksensoren zur Messung des atmosphärischen Drucks. Sie werden in erster Linie zur Bestimmung von Höhenänderungen verwendet, können aber auch indirekt Aufschluss über die vertikale Positionsänderung der Vorrichtung geben.

Es ist auch möglich, einen GPS-Empfänger zum Erfassen einer Bewegung und/oder Lageänderung der Vorrichtung zu verwenden. Allerdings ist der Energieverbrach eines GPS-Empfängers höher als der von beispielsweise Beschleunigungsmessers und/oder Gyroskopen, insbesondere, wenn Beschleunigungsmesser und/oder Gyroskop als MEMS vorliegen.

Der mindestens eine Sensor wird verwendet, um die Vorrichtung aus dem Ruhezustand in den Aktivzustand zu versetzen, wenn mittels des mindestens einen Sensors eine (definierte) Bewegung und/oder Lageänderung der Vorrichtung erfasst wird.

Wird die Vorrichtung im Freien betrieben, können natürliche Prozesse eine Bewegung und/oder Lageänderung der Vorrichtung verursachen, wie beispielsweise Wind, Regen und/oder Tiere. Es ist möglich, dass die Vorrichtung konfiguriert ist, dass nicht jede Bewegung und/oder Lageänderung der Vorrichtung zu einem Versetzen der Vorrichtung aus dem Ruhezustand in den Aktivzustand führt.

In einer Ausführungsform der vorliegenden Offenbarung ist die Steuereinheit konfiguriert, ein oder mehrere Signale des mindestens einen Sensors und/oder daraus abgeleitete Werte mit einem oder mehreren vordefinierten Schwellenwerten und/oder Bedingungen zu vergleichen. Die Steuereinheit kann konfiguriert sein, die Vorrichtung nur dann aus dem Ruhezustand in den Aktivzustand zu versetzen, wenn das eine oder die mehreren Signale und/oder daraus abgeleitete Werte größer als der eine oder die mehreren vordefinierten Schwellenwerte sind. Der eine oder die mehreren Schwellenwerte können beispielsweise von dem Hersteller der Vorrichtung vorgegeben und/oder von dem Nutzer gewählt oder festgelegt werden.

Es ist möglich, dass die Steuereinheit Zugriff auf ein oder mehrere Ereignisprofile hat. Die Steuereinheit kann konfiguriert sein, das mindestens eine Signal oder daraus abgeleitete Werte mit einem oder mehreren Ereignisprofilen zu vergleichen. Die Steuereinheit kann konfiguriert sein, die Vorrichtung nur dann aus dem Ruhezustand in den Aktivzustand zu versetzen, wenn das mindestens eine Signal oder die daraus abgeleiteten Werte mit einem definierten Ereignisprofil übereinstimmen oder eine vordefinierte Mindestähnlichkeit aufweisen.

Ein "Ereignisprofil" umfasst ein oder mehrere vordefinierte Kriterien und/oder Bedingungen, die bestimmen, was ein spezifisches Ereignis darstellt, das ein Aufwachen und Aktivwerden der Vorrichtung rechtfertigt. Die Erstellung eines Ereignisprofils umfasst die Identifizierung relevanter Auslöser, die Festlegung von Erkennungsparametern und die Konfiguration der Reaktion der Vorrichtung auf diese Auslöser.

Eine Auslösebedingung kann sein:
- eine Bewegung,
- eine Bewegung mit einer Geschwindigkeit, die größer als ein vordefinierter Schwellenwert ist,
- eine Bewegung über eine Zeitspanne, die größer als ein vordefinierter Schwellenwert ist,
- eine Bewegung in eine definierte Richtung,
- eine Kombination definierter Bewegungen (z.B. über definierte Zeitspannen, mit definierten Geschwindigkeiten und/oder in definierte Richtungen),
- eine Beschleunigung,
- eine Beschleunigung, die größer als ein vordefinierter Schwellenwert ist,
- eine Beschleunigung über eine Zeitspanne, die größer als ein vordefinierter Schwellenwert ist,
- eine Beschleunigung in eine definierte Richtung,
- eine Kombination definierter Beschleunigungen (z.B. über definierte Zeitspannen, mit definierten Geschwindigkeiten und/oder in definierte Richtungen),
- eine Drehung,
- eine Drehung um einen Winkel, der größer als ein vordefinierter Schwellenwert ist,
- eine Drehung um eine definierte Achse,
- eine oder mehrere Drehungen über eine Zeitspanne, die größer als ein vordefinierter Schwellenwert ist,
- eine Kombination definierter Drehungen (z.B. über definierte Zeitspannen, mit definierten Geschwindigkeiten und/oder in definierte Richtungen), und/oder
- eine Kombination aus zwei oder mehr der genannten Auslösebedingungen.

Ereignisprofile können anhand empirischer Untersuchungen erstellt werden. Dazu kann die Vorrichtung verschiedenen Bewegungen und/oder Lageänderungen ausgesetzt werden, die durch verschiedene Ereignisse verursacht werden. Es können die Signale, die von dem mindestens einen Sensor in Reaktion auf die verschiedenen Bewegungen und/oder Lageänderungen gemessen werden, erfasst und daraus Ereignisprofile erstellt werden.

Ereignisse können sein: Bewegung und/oder Lageänderung durch Wind, Bewegung und/oder Lageänderung durch Regen, Bewegung und/oder Lageänderung durch Starkregen, Bewegung und/oder Lageänderung durch Hagel, Bewegung und/oder Lageänderung durch Umfallen der Vorrichtung, Bewegung und/oder Lageänderung durch Herunterfallen der Vorrichtung, Bewegung und/oder Lageänderung durch eine Interaktion der Vorrichtung mit einem Tier, Bewegung und/oder Lageänderung durch Wartung der Vorrichtung, Bewegung und/oder Lageänderung durch Reinigen eines mit Flüssigkeit gefüllten Behälters zum Immobilisieren von Gliederfüßern, Bewegung und/oder Lageänderung durch Erneuern oder Austauschen einer Klebefläche zum Immobilisieren von Gliederfüßern, Bewegung und/oder Lageänderung durch Entwenden der Vorrichtung, Bewegung und/oder Lageänderung durch Fortbewegen der Vorrichtung von ihrer ursprünglichen Position.

Die Steuereinheit kann konfiguriert sein, die Vorrichtung nur dann aus dem Ruhezustand in den Aktivzustand zu versetzen, wenn das mindestens eine Signal oder daraus abgeleitete Werte einem vordefinierten Ereignisprofil entspricht.

Die Steuereinheit kann konfiguriert sein, die Vorrichtung nur dann aus dem Ruhezustand in den Aktivzustand zu versetzen, wenn das mindestens eine Signal ein extremes Kippereignis anzeigt.

Ein "extremes Kippereignis" bezieht sich auf eine Situation oder ein Ereignis, bei dem die Vorrichtung von ihrer normalen Ausrichtung und/oder Gleichgewichtsposition in einen Winkel abweicht, der ihre konstruktive oder betriebliche Kippschwellenwerte deutlich überschreitet. Diese Abweichung kann plötzlich oder allmählich erfolgen, ist aber dadurch gekennzeichnet, dass sie eine Winkelverschiebung erreicht, die über die normalen Betriebsgrenzen hinausgeht und möglicherweise zu Betriebsstörungen, Funktionsverlust oder physischen Schäden führt. Ein extremes Kippereignis kann bei einer mit einer Flüssigkeit befüllten Behälter zum Immobilisieren von Gliederfüßern dazu führen, dass die Flüssigkeit ausläuft. Ein extremes Kippereignis kann dazu führen, dass die Kamera nicht mehr auf den Sammelbereich gerichtet ist und keine Bildaufnahme von dem Sammelbereich mehr erzeugen kann. Ein extremes Kippereignis kann dazu führen, dass eine Klebefläche aus einer Verankerung rutscht oder fällt.

Die Steuereinheit ist konfiguriert, ein Signal von dem mindestens einen Sensor zu empfangen. Das mindestens eine Signal kann beispielsweise ein elektrisches oder optisches Signal sein; üblicherweise ist es ein elektrisches Signal. Die Steuereinheit ist konfiguriert, das Signal zu analysieren und zu interpretieren. Die Steuereinheit ist konfiguriert, anhand des Signals zu erkennen, ob die Vorrichtung bewegt wurde und/oder sich die Lage (z.B. die Orientierung gegenüber der Erdoberfläche und/oder der Abstand von Erdboden) geändert hat. Die Steuereinheit ist konfiguriert, das von dem mindestens einen Sensor empfangene mindestens eine Signal einem Ereignis zuzuordnen. Die Steuereinheit ist konfiguriert zu prüfen, ob eine Auslösebedingung erfüllt ist.

Ist eine Auslösebedingung erfüllt, legt das Ereignisprofil üblicherweise fest, welche Aktion von der Vorrichtung (oder ihren Komponenten) in Reaktion auf das Erfüllen der Auslösebedingung durchgeführt wird.

Die Steuereinheit ist konfiguriert, in Reaktion auf die Zuordnung des Signals zu dem Ereignis die Vorrichtung aus dem Ruhezustand in den Aktivzustand zu versetzen. Mit anderen Worten: ist die Auslösebedingung erfüllt, versetzt die Steuereinheit die Vorrichtung vom Ruhezustand in den Aktivzustand. Es ist möglich, dass in Abhängigkeit des jeweiligen Ereignisses, eine oder mehrere weitere Aktionen initiiert werden.

In einer Ausführungsform der vorliegenden Offenbarung ist die Steuereinheit konfiguriert, die Vorrichtung vom Ruhezustand in den Aktivzustand zu versetzen und die Sendeeinheit zu veranlassen, eine Information an ein separates Computersystem zu übermitteln. Die Information kann eine oder mehrere Auslösebedingungen betreffen, die dafür gesorgt haben, dass die Vorrichtung aus dem Ruhezustand in den Aktivzustand versetzt wurde. Die Information kann die eine oder die mehreren Auslösebedingungen anzeigen, die dafür gesorgt haben, dass die Vorrichtung aus dem Ruhezustand in den Aktivzustand versetzt wurde. Die Information kann ein Ereignis anzeigen, dem die Steuereinheit das mindestens eine Signal des mindestens einen Sensors zugeordnet hat. Das Ereignis kann z.B. sein, dass die Vorrichtung umgefallen oder heruntergefallen oder gekippt ist. Das Ereignis kann z.B. sein, dass sich die Vorrichtung nicht mehr an der ursprünglichen Position und/oder in der ursprünglichen Lage befindet. Das Ereignis kann eine Wartung der Vorrichtung oder von Teilen der Vorrichtung sein. Die Information kann eine Aufforderung an einen Nutzer umfassen, die Vorrichtung in Augenschein zu nehmen.

In einer Ausführungsform der vorliegenden Offenbarung ist die Steuereinheit konfiguriert, die Vorrichtung vom Ruhezustand in den Aktivzustand zu versetzen und die Position der Vorrichtung zu bestimmen. Es ist z.B. möglich, dass das mindestens eine Signal des mindestens einen Sensors einen Hinweis darauf gibt, dass sich die Vorrichtung nicht mehr an der ursprünglichen Position befindet. Sie könnte entwendet worden sein, z.B. gestohlen oder von einem Tier verschleppt worden sein.

Für diesen Zweck sind Mittel zur Positionsbestimmung vorhanden. Diese Mittel können zumindest anteilig Bestandteile der Vorrichtung sein. Zum Beispiel kann die Vorrichtung einen GPS-Empfänger und Zeitmesser umfassen.

Ein GPS-Empfänger (GPS: Globales Positionsbestimmungssystem) ist Teil eines Satellitennavigationssystems zur Positionsbestimmung. Ein Satellitennavigationssystem basiert auf Satelliten, die mit kodierten Radiosignalen fortwährend ihre aktuelle Position und die genaue Uhrzeit ausstrahlen. Aus den Signallaufzeiten kann ein Empfänger (in dieser Beschreibung als der GPS-Empfänger bezeichnet) seine eigene Position und Geschwindigkeit berechnen. Bekannte Satellitennavigationssysteme sind beispielsweise NAVSTAR GPS, GLONASS, Galileo oder Beidou. Da sich die Abkürzung GPS (Globales Positionsbestimmungssystem) in der Umgangssprache als generische Bezeichnung für alle Satellitennavigationssysteme etabliert hat, wird in dieser Beschreibung der Begriff GPS als Sammelbezeichnung für alle Positionsbestimmungssysteme verwendet. Der Begriff "GPS-Empfänger" soll also nicht limitierend im Hinblick auf das GPS-Satellitennavigationssystem verstanden werden; er soll auch Empfänger anderer Satellitennavigationssysteme umfassen.

Die Position der Vorrichtung kann ferner aus der (Mobil-)Funkzelle, in der sich die Vorrichtung befindet, abgeleitet werden. Im Mobilfunk beruht die einfachste Art der Standortbestimmung darauf, dass die Zelle, in der sich eine Sendeeinheit befindet, bekannt ist. Da beispielsweise ein eingeschaltetes Mobilfunktelefon mit einer Basisstation in Verbindung steht, lässt sich die Position des Mobilfunktelefons zumindest einer Mobilfunkzelle (Cell-ID) zuweisen. Analog kann die Position der Vorrichtung umfassend eine Sendeeinheit mit der Mobilfunkzelle gleichgesetzt werden, mit der die Sendeeinheit verbunden ist. Mit Hilfe von GSM (Global System for Mobile Communications) kann der Standort einer Sendeeinheit auf mehrere hundert Meter genau bestimmt werden. In Städten kann der Standort auf 100 bis 500 m genau bestimmt werden; in ländlichen Gegenden erhöht sich der Radius auf 10 km oder mehr. Wird die Information über die Cell-ID mit dem TA-Parameter (TA: Timing Advance) kombiniert, dann kann die Genauigkeit erhöht werden. Je höher dieser Wert ist, desto weiter weg ist die Sendeeinheit von der Basisstation. Mit dem EOTD-Verfahren (EOTD: Enhanced Observed Time Difference) lässt sich eine Sendeeinheit noch genauer orten. Dabei werden die Laufzeitunterschiede der Signale zwischen der Sendeinheit und mehreren Empfangseinheiten bestimmt.

Weitere Möglichkeiten der Positionsbestimmung sind im Stand der Technik beschrieben (siehe z.B. DE10029137A1, DE102010041548A1, DE102012214203A1, DE102015121384A1, DE102016225886A1, US2015119086A1).

Die Sendeeinheit kann konfiguriert sein, die Sendeeinheit zu veranlassen, die ermittelte Position an ein separates Computersystem zu übermitteln.

Die ermittelte Position der Vorrichtung kann mit einer Referenzposition verglichen werden. Die Referenzposition ist üblicherweise die ursprüngliche Position der Vorrichtung. Die ursprüngliche Position der Vorrichtung kann die Position sein, an der die Vorrichtung aufgestellt oder aufgehängt und/oder installiert und/oder in Betrieb genommen worden ist.

Die Sendeeinheit kann konfiguriert sein, die Sendeeinheit zu veranlassen, die ermittelte Position nur dann an ein separates Computersystem zu übermitteln, wenn die ermittelte Position von der Referenzposition abweicht.

Die Sendeeinheit kann konfiguriert sein, die Sendeeinheit zu veranlassen, die ermittelte Position nur dann an ein separates Computersystem zu übermitteln, wenn die Abweichung der ermittelten Position von der Referenzposition größer als ein vordefinierter Schwellenwert ist, z.B. wenn die Distanz zwischen der ermittelten Position und der Referenzposition größer als ein vordefinierter Schwellenwert ist.

In einer Ausführungsform der vorliegenden Offenbarung ist die Steuereinheit konfiguriert, in Reaktion auf die Zuordnung des mindestens einen Signals des mindestens einen Sensors zu einem Reinigungsereignis die Vorrichtung vom Ruhezustand in den Aktivzustand zu versetzen, und eine Information darüber, dass eine Reinigung stattgefunden hat, in einem Datenspeicher zu speichern und/oder an ein separates Computersystem zu übermitteln. Der Datenspeicher kann ein Bestandteil der Vorrichtung sein oder mit dieser z.B. über ein Netzwerk verbunden sein. Diese Information kann bei der Analyse von Bildaufnahmen, die vor und/oder nach dem Reinigungsereignis aufgenommen wurden, verwendet werden. Werden bei einer solchen Analyse die Zahlen der vor und nach der Reinigung in den Bildaufnahmen abgebildeten Gliederfüßer ermittelt, kann die Tatsache, dass eine Reinigung stattgefunden hat und damit unmittelbar nach der Reinigung die Zahl der Gliederfüßer im abgebildeten Sammelbereich auf Null gesunken ist, berücksichtigt werden. Eine Reinigung kann einen Austausch einer Flüssigkeit zum Immobilisieren von Gliederfüßern und/oder einen Austausch und/oder ein Erneuern einer Klebefläche zum Immobilisieren von Gliederfüßern umfassen.

Es ist möglich, dass die Sendeeinheit konfiguriert ist, in Reaktion auf die Zuordnung des mindestens einen Signals des mindestens einen Sensors zu einem Reinigungsereignis die Vorrichtung vom Ruhezustand in den Aktivzustand zu versetzen, den Zeitpunkt des Reinigungsereignisses zu erfassen und den Zeitpunkt in einem Datenspeicher zu speichern und/der an ein separates Computersystem zu übermitteln.

Es ist möglich, dass die Sendeeinheit konfiguriert ist, in Reaktion auf die Zuordnung des mindestens einen Signals des mindestens einen Sensors zu einem Reinigungsereignis die Vorrichtung vom Ruhezustand in den Aktivzustand zu versetzen und die Kamera zu veranlassen eine Bildaufnahme von dem gereinigten Sammelbereich zu erzeugen.

Es ist möglich, dass die Sendeeinheit konfiguriert ist, die Bildaufnahme zusammen mit einer Information darüber, dass ein Reinigungsereignis erkannt wurde und/oder den Zeitpunkt des Reinigungsereignisses in einem Datenspeicher zu speichern und/oder an ein separates Computersystem zu übermitteln.

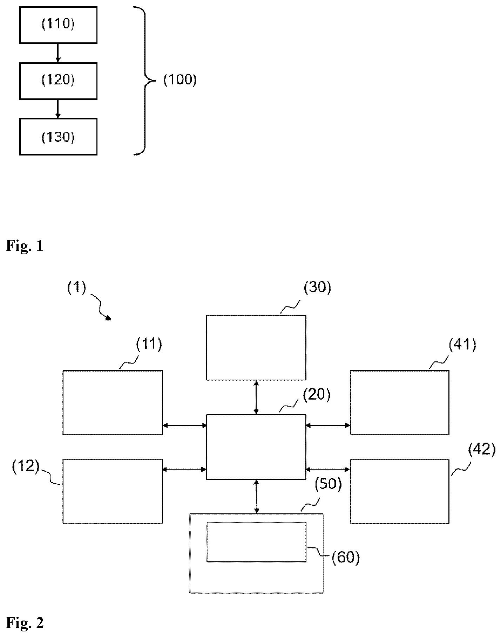

Fig. 1 zeigt beispielhaft und schematisch eine Ausführungsform des computer-implementierten Verfahrens der vorliegenden Offenbarung in Form eines Ablaufschemas.

Das Verfahren (100) umfasst die Schritte:
(110) Empfangen eines Signals von einem Sensor, wobei das Signal eine Bewegung und/oder Lageänderung einer Vorrichtung zum Überwachen von Gliederfüßern anzeigt,
(120) Zuordnen des Signals zu einem Ereignis,
(130 in Reaktion auf das Zuordnen des Signals zu dem Ereignis, Aufwecken der Vorrichtung aus einem Ruhezustand in einen Aktivzustand.

Fig. 2 zeigt beispielhaft und schematisch eine Ausführungsform der Vorrichtung der vorliegenden Offenbarung.

Die Vorrichtung (1) umfasst eine Verarbeitungseinheit (20) (engl. *processing unit*) und einen Speicher (50).

Die Verarbeitungseinheit (20) kann einen oder mehrere Prozessoren allein oder in Kombination mit einem oder mehreren Speichern umfassen. Bei der Verarbeitungseinheit (20) kann es sich um gewöhnliche Computerhardware handeln, die in der Lage ist, Informationen wie z.B. digitale Bildaufnahmen, Computerprogramme und/oder andere digitale Informationen zu verarbeiten. Die Verarbeitungseinheit (20) besteht üblicherweise aus einer Anordnung elektronischer Schaltungen, von denen einige als integrierter Schaltkreis oder als mehrere miteinander verbundene integrierte Schaltkreise (ein integrierter Schaltkreis wird manchmal auch als "Chip" bezeichnet) ausgeführt sein können. Die Verarbeitungseinheit (20) kann konfiguriert sein, Computerprogramme auszuführen, die im Speicher (50) gespeichert sein können.

Der Speicher (50) kann eine gewöhnliche Computerhardware sein, die in der Lage ist, Informationen wie z.B. digitale Bildaufnahmen (z.B. Repräsentationen des Untersuchungsbereichs), Daten, Computerprogramme und/oder andere digitale Informationen entweder vorübergehend und/oder dauerhaft zu speichern. Der Speicher (50) kann einen flüchtigen und/oder nichtflüchtigen Speicher umfassen und kann fest eingebaut oder entfernbar sein. Beispiele für geeignete Speicher sind RAM (Random Access Memory), ROM (Read-Only Memory), eine Festplatte, ein Flash-Speicher oder eine Kombination der oben genannten.

Zusätzlich zum Speicher (50) kann die Verarbeitungseinheit (20) auch mit einer oder mehreren Schnittstellen (11, 12, 30, 41, 42) verbunden sein, um Informationen anzuzeigen, zu übertragen und/oder zu empfangen. Die Schnittstellen können eine oder mehrere Kommunikationsschnittstellen (41, 42) und/oder eine oder mehrere Benutzerschnittstellen (11, 12, 30) umfassen. Die eine oder mehrere Kommunikationsschnittstellen (41, 42) können so konfiguriert sein, dass sie Informationen senden und/oder empfangen, z.B. zu und/oder von einer Kamera, anderen Computersystemen, Netzwerken, Datenspeichern oder dergleichen. Die eine oder mehrere Kommunikationsschnittstellen (41, 42) können so konfiguriert sein, dass sie Informationen über physische (verdrahtete) und/oder drahtlose Kommunikationsverbindungen übertragen und/oder empfangen. Die eine oder die mehreren Kommunikationsschnittstellen (41, 42) können eine oder mehrere Schnittstellen für die Verbindung mit einem Netzwerk enthalten, z.B. unter Verwendung von Technologien wie Mobiltelefon, Wi-Fi, Satellit, Kabel, DSL, Glasfaser und/oder dergleichen. In einigen Beispielen können die eine oder die mehreren Kommunikationsschnittstellen (41, 42) eine oder mehrere Nahbereichskommunikationsschnittstellen umfassen, die so konfiguriert sind, dass sie Geräte mit Nahbereichskommunikationstechnologien wie NFC, RFID, Bluetooth, Bluetooth LE, ZigBee, Infrarot (z. B. IrDA) oder Ähnlichem verbinden.

Die Benutzerschnittstellen (11, 12, 30) können eine Anzeige (30) umfassen. Eine Anzeige (30) kann so konfiguriert sein, dass sie einem Benutzer Informationen anzeigt. Geeignete Beispiele hierfür sind eine Flüssigkristallanzeige (LCD), eine Leuchtdiodenanzeige (LED), ein Plasmabildschirm (PDP) oder Ähnliches. Die Benutzereingabeschnittstelle(n) (11, 12) kann/können verdrahtet oder drahtlos sein und kann/können so konfiguriert sein, dass sie Informationen von einem Benutzer in das Computersystem (1) empfängt/empfangen, z.B. zur Verarbeitung, Speicherung und/oder Anzeige. Geeignete Beispiele für Benutzereingabeschnittstellen (11, 12) sind ein Mikrofon, ein Bild- oder Videoaufnahmegerät (z.B. eine Kamera), eine Tastatur oder ein Tastenfeld, ein Joystick, eine berührungsempfindliche Oberfläche (getrennt von einem Touchscreen oder darin integriert) oder ähnliches. In einigen Beispielen können die Benutzerschnittstellen eine automatische Identifikations- und Datenerfassungstechnologie (AIDC) für maschinenlesbare Informationen enthalten. Dazu können Barcodes, Radiofrequenz-Identifikation (RFID), Magnetstreifen, optische Zeichenerkennung (OCR), Karten mit integrierten Schaltkreisen (ICC) und ähnliches gehören. Die Benutzerschnittstellen können ferner eine oder mehrere Schnittstellen für die Kommunikation mit Peripheriegeräten wie Druckern und/oder Kameras und dergleichen umfassen.

Ein oder mehrere Computerprogramme (60) können im Speicher (50) gespeichert sein und von der Verarbeitungseinheit (20) ausgeführt werden, die dadurch programmiert wird, die in dieser Beschreibung beschriebenen Funktionen zu erfüllen. Das Abrufen, Laden und Ausführen von Anweisungen des Computerprogramms (60) kann sequenziell erfolgen, so dass jeweils ein Befehl abgerufen, geladen und ausgeführt wird. Das Abrufen, Laden und/oder Ausführen kann aber auch parallel erfolgen.

Die Vorrichtung kann ein Computersystem in Form eines Laptops, Notebooks, Netbooks und/der Tablet-PCs oder Smartphones sein oder ein solches umfassen; die Vorrichtung kann auch ein Bestandteil einer Kamera sein. Ebenso können eine oder mehrere Kameras Bestandteil der Vorrichtung sein.

In einer Ausführungsform der vorliegenden Offenbarung umfasst die Vorrichtung eine Fangvorrichtung für Gliederfüßer oder spezifische Gliederfüßer. In einer Ausführungsform der vorliegenden Offenbarung umfasst die Fangvorrichtung den Sammelbereich. In einer Ausführungsform der vorliegenden Offenbarung umfasst die Kamera mindestens einen Kamerasensor auf den der Sammelbereich (z.B. durch eine Kameraoptik, die ein Bestandteil der Vorrichtung sein kann) abgebildet wird.

## Patentansprüche

1. Vorrichtung (1) zum Überwachen von Gliederfüßern umfassend
- eine Sendeinheit zum Übermitteln von Informationen an ein separates Computersystem,
- einen Sensor,
- eine Steuereinheit,
wobei die Steuereinheit konfiguriert ist,
- in einem Ruhezustand ein Signal von dem Sensor zu empfangen, wobei das Signal eine Bewegung und/oder Lageänderung der Vorrichtung (1) anzeigt,
**dadurch gekennzeichnet, dass**
die Vorrichtung (1) eine Kamera umfasst, wobei die Kamera konfiguriert ist, eine Bildaufnahme von einem Sammelbereich zu erzeugen,
und die Steuereinheit konfiguriert ist
- in dem Ruhezustand das Signal einem Ereignis zuzuordnen,
- in Reaktion auf die Zuordnung des Signals zu dem Ereignis die Vorrichtung (1) aus dem Ruhezustand in einen Aktivzustand zu versetzen.

2. Vorrichtung (1) gemäß Anspruch 1, wobei der Sensor ein Beschleunigungsmesser ist oder einen Beschleunigungsmesser umfasst.

3. Vorrichtung (1) gemäß Anspruch 1 oder 2, wobei der Sensor ein Gyroskop ist oder umfasst.

4. Vorrichtung (1) gemäß einem der Ansprüche 1 bis 3, wobei der Sensor ein Magnetometer ist oder umfasst.

5. Vorrichtung (1) gemäß einem der Ansprüche 1 bis 4, wobei der Sensor ein Barometer ist oder umfasst.

6. Vorrichtung (1) gemäß einem der Ansprüche 1 bis 5, wobei der Sensor ein mikro-elektromechanisches System ist.

7. Vorrichtung (1) gemäß einem der Ansprüche 1 bis 6, wobei die Steuereinheit konfiguriert ist, das Signal und/oder einen daraus abgeleiteten Wert mit einem Schwellenwert und/oder einer Bedingung zu vergleichen, wobei die Steuereinheit konfiguriert ist, die Vorrichtung (1) nur dann aus dem Ruhezustand in den Aktivzustand zu versetzen, wenn das Signal und/oder der daraus abgeleitete Wert in definierter Weise von dem Schwellenwert abweicht und/oder die Bedingung erfüllt ist.

8. Vorrichtung (1) gemäß einem der Ansprüche 1 bis 7, wobei die Steuereinheit konfiguriert ist, das Signal und/oder einen daraus abgeleiteten Wert mit einer Auslösebedingung zu vergleichen und die Vorrichtung (1) nur dann aus dem Ruhezustand in den Aktivzustand zu versetzen, wenn die Auslösebedingung erfüllt ist.

9. Vorrichtung (1) gemäß einem der Ansprüche 1 bis 8, wobei die Auslösebedingung eine oder mehrere der folgenden Auslösebedingungen ist oder umfasst:
- eine Bewegung der Vorrichtung (1)oder eines Teils davon,
- eine Bewegung der Vorrichtung (1) oder eines Teils davon mit einer Geschwindigkeit, die größer als ein vordefinierter Schwellenwert ist,
- eine Bewegung der Vorrichtung (1) oder eines Teils davon über eine Zeitspanne, die größer als ein vordefinierter Schwellenwert ist,
- eine Bewegung der Vorrichtung (1) oder eines Teils davon in eine definierte Richtung,
- eine Kombination definierter Bewegungen der Vorrichtung (1) oder eines Teils davon,
- eine Beschleunigung der Vorrichtung (1) oder eines Teils davon, die größer als ein vordefinierter Schwellenwert ist,
- eine Beschleunigung der Vorrichtung (1) oder eines Teils davon über eine Zeitspanne, die größer als ein vordefinierter Schwellenwert ist,
- eine Beschleunigung der Vorrichtung (1) oder eines Teils davon in eine definierte Richtung,
- eine Kombination definierter Beschleunigungen der Vorrichtung (1) oder eines Teils davon,
- eine Drehung der Vorrichtung (1) oder eines Teils davon,
- eine Drehung der Vorrichtung (1) oder eines Teils davon um einen Winkel, der größer als ein vordefinierter Schwellenwert ist,
- eine Drehung der Vorrichtung (1) oder eines Teils davon um eine definierte Achse,
- eine oder mehrere Drehungen der Vorrichtung (1) oder eines Teils davon über eine Zeitspanne, die größer als ein vordefinierter Schwellenwert ist,
- eine Kombination definierter Drehungen der Vorrichtung (1) oder eines Teils davon, und/oder
- eine Kombination aus zwei oder mehr der genannten Auslösebedingungen.

10. Vorrichtung (1) gemäß einem der Ansprüche 1 bis 9, wobei die Steuereinheit konfiguriert ist, das Signal dem Ereignis anhand eines vordefinierten Ereignisprofils zuzuordnen.

11. Vorrichtung (1) gemäß einem der Ansprüche 1 bis 10, wobei das vordefinierte Ereignisprofil ein oder mehrere der folgenden Ereignisse anzeigt:
- Bewegung und/oder Lageänderung der Vorrichtung (1) oder eines Teils davon durch Wind,
- Bewegung und/oder Lageänderung der Vorrichtung (1) oder eines Teils davon durch Regen,
- Bewegung und/oder Lageänderung der Vorrichtung (1) oder eines Teils davon durch Starkregen,
- Bewegung und/oder Lageänderung der Vorrichtung (1) oder eines Teils davon durch Hagel,
- Bewegung und/oder Lageänderung der Vorrichtung (1) oder eines Teils davon durch Umfallen der Vorrichtung (1),
- Bewegung und/oder Lageänderung der Vorrichtung (1) oder eines Teils davon durch Herunterfallen der Vorrichtung (1) oder des Teils davon,
- Bewegung und/oder Lageänderung der Vorrichtung (1) oder eines Teils davon durch eine Interaktion der Vorrichtung (1) oder des Teils davon mit einem Tier,
- Bewegung und/oder Lageänderung der Vorrichtung (1) oder eines Teils davon durch Wartung der Vorrichtung (1) oder des Teils davon,
- Bewegung und/oder Lageänderung der Vorrichtung (1) oder eines Teils davon durch Reinigen eines mit Flüssigkeit gefüllten Behälters zum Immobilisieren von Gliederfüßern,
- Bewegung und/oder Lageänderung der Vorrichtung (1) oder eines Teils davon durch Erneuern oder Austauschen einer Klebefläche zum Immobilisieren von Gliederfüßern,
- Bewegung und/oder Lageänderung der Vorrichtung (1) oder eines Teils davon durch Entwenden der Vorrichtung (1) oder des Teils davon,
- Bewegung und/oder Lageänderung der Vorrichtung (1) oder eines Teils davon durch Fortbewegen der Vorrichtung (1) oder des Teils davon von ihrer/seiner ursprünglichen Position.

12. Vorrichtung (1) gemäß einem der Ansprüche 1 bis 11, wobei die Steuereinheit konfiguriert ist, die Vorrichtung (1) aus dem Ruhezustand in den Aktivzustand zu versetzen, wenn das Signal ein extremes Kippereignis anzeigt.

13. Vorrichtung (1) gemäß einem der Ansprüche 1 bis 12, wobei die Steuereinheit konfiguriert ist, die Vorrichtung (1) vom Ruhezustand in den Aktivzustand zu versetzen und die Sendeeinheit zu veranlassen, eine Information an das separate Computersystem zu übermitteln, wobei die Information eine Auslösebedingung anzeigt, die dafür gesorgt hat, dass die Vorrichtung (1) aus dem Ruhezustand in den Aktivzustand versetzt wurde und/oder die Information ein Ereignis anzeigt, dem die Steuereinheit das Signal zugeordnet hat, und/oder die Information eine Aufforderung an einen Nutzer umfasst, die Vorrichtung (1) in Augenschein zu nehmen.

14. Vorrichtung (1) gemäß einem der Ansprüche 1 bis 13, wobei die Steuereinheit konfiguriert ist, die Vorrichtung (1) vom Ruhezustand in den Aktivzustand zu versetzen und eine Position der Vorrichtung (1) zu ermitteln.

15. Vorrichtung (1) gemäß einem der Ansprüche 1 bis 14, wobei die Steuereinheit konfiguriert ist, die Vorrichtung (1) vom Ruhezustand in den Aktivzustand zu versetzen, eine Position der Vorrichtung (1) zu ermitteln und die Sendeeinheit zu veranlassen, die ermittelte Position an das separate Computersystem zu übermitteln.

16. Vorrichtung (1) gemäß einem der Ansprüche 1 bis 15, wobei die Steuereinheit konfiguriert ist, die Vorrichtung (1) vom Ruhezustand in den Aktivzustand zu versetzen, eine Position der Vorrichtung (1) zu ermitteln, die ermittelte Position mit einer Referenzposition zu vergleichen und die ermittelte Position dann an ein separates Computersystem zu übermitteln, wenn die ermittelte Position von der Referenzposition abweicht.

17. Vorrichtung (1) gemäß einem der Ansprüche 1 bis 16, wobei die Steuereinheit konfiguriert ist, in Reaktion auf die Zuordnung des Signals zu einem Reinigungsereignis eine Information darüber, dass eine Reinigung stattgefunden hat, in einem Datenspeicher zu speichern.

18. Vorrichtung (1) gemäß einem der Ansprüche 1 bis 17, wobei die Steuereinheit konfiguriert ist, in Reaktion auf die Zuordnung des Signals zu einem Reinigungsereignis den Zeitpunkt des Reinigungsereignisses zu erfassen und den Zeitpunkt in einem Datenspeicher zu speichern.

19. Vorrichtung (1) gemäß einem der Ansprüche 1 bis 18, wobei die Steuereinheit konfiguriert ist, in Reaktion auf die Zuordnung des Signals zu einem Reinigungsereignis, die Vorrichtung (1) vom Ruhezustand in den Aktivzustand zu versetzen, und eine Information darüber, dass eine Reinigung stattgefunden hat, an das separate Computersystem zu übermitteln.

20. Vorrichtung (1) gemäß einem der Ansprüche 1 bis 19, wobei die Steuereinheit konfiguriert ist, in Reaktion auf die Zuordnung des Signals zu einem Reinigungsereignis die Vorrichtung (1) vom Ruhezustand in den Aktivzustand zu versetzen und die Kamera zu veranlassen eine Bildaufnahme von dem gereinigten Sammelbereich zu erzeugen.

21. Vorrichtung (1) gemäß einem der Ansprüche 1 bis 20, wobei der Sammelbereich ein Teil einer Fangvorrichtung für Gliederfüßer ist.

## Claims

1. Device (1) for monitoring arthropods, comprising
• a transmitting unit for transmitting information to a separate computer system,
• a sensor,
• a control unit, wherein the control unit is configured to
• receive, in a sleep state, a signal from the sensor, wherein the signal indicates a movement and/or change in orientation and/or position of the device (1), **characterised in that** the device (1) comprises a camera, wherein the camera is configured to capture an image of a collection area, and the control unit is configured to
• assign the signal to an event in the sleep state,
• switch the device (1) from the sleep state to an active state in response to the assignment of the signal to the event.

2. Device (1) according to claim 1, wherein the sensor is or comprises an accelerometer.

3. Device (1) according to claim 1 or 2, wherein the sensor is or comprises a gyroscope.

4. Device (1) according to any one of claims 1 to 3, wherein the sensor is or comprises a magnetometer.

5. Device (1) according to any one of claims 1 to 4, wherein the sensor is or comprises a barometer.

6. Device (1) according to any one of claims 1 to 5, wherein the sensor is a micro-electromechanical system.

7. Device (1) according to any one of claims 1 to 6, wherein the control unit is configured to compare the signal and/or a value derived therefrom with a threshold value and/or a condition, wherein the control unit is configured to switch the device (1) from the sleep state to the active state only when the signal and/or the value derived therefrom deviates from the threshold value in a defined manner and/or the condition is fulfilled.

8. Device (1) according to any one of claims 1 to 7, wherein the control unit is configured to compare the signal and/or a value derived therefrom with a trigger condition and to switch the device (1) from the sleep state to the active state only when the trigger condition is fulfilled.

9. Device (1) according to any one of claims 1 to 8, wherein the trigger condition is or comprises one or more of the following trigger conditions:
• a movement of the device (1) or a part thereof,
• a movement of the device (1) or a part thereof at a speed greater than a predefined threshold value,
• a movement of the device (1) or a part thereof over a time period greater than a predefined threshold value,
• a movement of the device (1) or a part thereof in a defined direction,
• a combination of defined movements of the device (1) or a part thereof,
• an acceleration of the device (1) or a part thereof greater than a predefined threshold value,
• an acceleration of the device (1) or a part thereof over a time period greater than a predefined threshold value,
• an acceleration of the device (1) or a part thereof in a defined direction,
• a combination of defined accelerations of the device (1) or a part thereof,
• a rotation of the device (1) or a part thereof,
• a rotation of the device (1) or a part thereof by an angle greater than a predefined threshold value,
• a rotation of the device (1) or a part thereof about a defined axis,
• one or more rotations of the device (1) or a part thereof over a time period greater than a predefined threshold value,
• a combination of defined rotations of the device (1) or a part thereof, and/or
• a combination of two or more of the aforementioned trigger conditions.

10. Device (1) according to any one of claims 1 to 9, wherein the control unit is configured to assign the signal to the event on the basis of a predefined event profile.

11. Device (1) according to any one of claims 1 to 10, wherein the predefined event profile indicates one or more of the following events:
• movement and/or change in orientation and/or position of the device (1) or a part thereof due to wind,
• movement and/or change in orientation and/or position of the device (1) or a part thereof due to rain,
• movement and/or change in orientation and/or position of the device (1) or a part thereof due to heavy rain,
• movement and/or change in orientation and/or position of the device (1) or a part thereof due to hail,
• movement and/or change in orientation and/or position of the device (1) or a part thereof due to the device (1) falling over,
• movement and/or change in orientation and/or position of the device (1) or a part thereof due to the device (1) or the part thereof falling down,
• movement and/or change in orientation and/or position of the device (1) or a part thereof due to an interaction of the device (1) or the part thereof with an animal,
• movement and/or change in orientation and/or position of the device (1) or a part thereof due to maintenance of the device (1) or the part thereof,
• movement and/or change in orientation and/or position of the device (1) or a part thereof due to cleaning of a container filled with liquid for immobilising arthropods,
• movement and/or change in orientation and/or position of the device (1) or a part thereof due to renewing or replacing an adhesive surface for immobilising arthropods,
• movement and/or change in orientation and/or position of the device (1) or a part thereof due to theft of the device (1) or the part thereof,
• movement and/or change in orientation and/or position of the device (1) or a part thereof due to moving the device (1) or the part thereof from its original position.

12. Device (1) according to any one of claims 1 to 11, wherein the control unit is configured to switch the device (1) from the sleep state to the active state when the signal indicates an extreme tipping event.

13. Device (1) according to any one of claims 1 to 12, wherein the control unit is configured to switch the device (1) from the sleep state to the active state and to cause the transmitting unit to transmit information to the separate computer system, wherein the information indicates a trigger condition that caused the device (1) to be switched from the sleep state to the active state and/or the information indicates an event to which the control unit has assigned the signal, and/or the information comprises a request to a user to inspect the device (1).

14. Device (1) according to any one of claims 1 to 13, wherein the control unit is configured to switch the device (1) from the sleep state to the active state and to determine a position of the device (1).

15. Device (1) according to any one of claims 1 to 14, wherein the control unit is configured to switch the device (1) from the sleep state to the active state, to determine a position of the device (1) and to cause the transmitting unit to transmit the determined position to the separate computer system.

16. Device (1) according to any one of claims 1 to 15, wherein the control unit is configured to switch the device (1) from the sleep state to the active state, to determine a position of the device (1), to compare the determined position with a reference position, and to transmit the determined position to a separate computer system when the determined position deviates from the reference position.

17. Device (1) according to any one of claims 1 to 16, wherein the control unit is configured to store, in response to the assignment of the signal to a cleaning event, information that a cleaning has taken place in a data memory.

18. Device (1) according to any one of claims 1 to 17, wherein the control unit is configured to record, in response to the assignment of the signal to a cleaning event, the time of the cleaning event and to store the time in a data memory.

19. Device (1) according to any one of claims 1 to 18, wherein the control unit is configured to switch the device (1) from the sleep state to the active state in response to the assignment of the signal to a cleaning event, and to transmit information that a cleaning has taken place to the separate computer system.

20. Device (1) according to any one of claims 1 to 19, wherein the control unit is configured to switch the device (1) from the sleep state to the active state in response to the assignment of the signal to a cleaning event, and to cause the camera to capture an image of the cleaned collection area.

21. Device (1) according to any one of claims 1 to 20, wherein the collection area is part of a trapping device for arthropods.

## Revendications

1. Dispositif (1) de surveillance des arthropodes, comprenant
• une unité de transmission pour transmettre des informations à un système informatique séparé,
• un capteur,
• une unité de commande, dans lequel l'unité de commande est configurée pour
• recevoir, dans un état de repos, un signal provenant du capteur, le signal indiquant un mouvement et/ou un changement d'orientation et/ou de position du dispositif (1), **caractérisé en ce que** le dispositif (1) comprend une caméra, la caméra étant configurée pour capturer une image d'une zone de collecte, et l'unité de commande est configurée pour
• attribuer le signal à un événement dans l'état de repos,
• faire passer le dispositif (1) de l'état de repos à un état actif en réponse à l'attribution du signal à l'événement.

2. Dispositif (1) selon la revendication 1, dans lequel le capteur est ou comprend un accéléromètre.

3. Dispositif (1) selon la revendication 1 ou 2, dans lequel le capteur est ou comprend un gyroscope.

4. Dispositif (1) selon l'une quelconque des revendications 1 à 3, dans lequel le capteur est ou comprend un magnétomètre.

5. Dispositif (1) selon l'une quelconque des revendications 1 à 4, dans lequel le capteur est ou comprend un baromètre.

6. Dispositif (1) selon l'une quelconque des revendications 1 à 5, dans lequel le capteur est un système micro-électromécanique.

7. Dispositif (1) selon l'une quelconque des revendications 1 à 6, dans lequel l'unité de commande est configurée pour comparer le signal et/ou une valeur qui en est dérivée avec une valeur seuil et/ou une condition, l'unité de commande étant configurée pour faire passer le dispositif (1) de l'état de repos à l'état actif uniquement lorsque le signal et/ou la valeur qui en est dérivée s'écarte de la valeur seuil d'une manière définie et/ou la condition est remplie.

8. Dispositif (1) selon l'une quelconque des revendications 1 à 7, dans lequel l'unité de commande est configurée pour comparer le signal et/ou une valeur qui en est dérivée avec une condition de déclenchement et pour faire passer le dispositif (1) de l'état de repos à l'état actif uniquement lorsque la condition de déclenchement est remplie.

9. Dispositif (1) selon l'une quelconque des revendications 1 à 8, dans lequel la condition de déclenchement est ou comprend une ou plusieurs des conditions de déclenchement suivantes :
• un mouvement du dispositif (1) ou d'une partie de celui-ci,
• un mouvement du dispositif (1) ou d'une partie de celui-ci à une vitesse supérieure à une valeur seuil prédéfinie,
• un mouvement du dispositif (1) ou d'une partie de celui-ci sur une durée supérieure à une valeur seuil prédéfinie,
• un mouvement du dispositif (1) ou d'une partie de celui-ci dans une direction définie,
• une combinaison de mouvements définis du dispositif (1) ou d'une partie de celui-ci,
• une accélération du dispositif (1) ou d'une partie de celui-ci supérieure à une valeur seuil prédéfinie,
• une accélération du dispositif (1) ou d'une partie de celui-ci sur une durée supérieure à une valeur seuil prédéfinie,
• une accélération du dispositif (1) ou d'une partie de celui-ci dans une direction définie,
• une combinaison d'accélérations définies du dispositif (1) ou d'une partie de celui-ci,
• une rotation du dispositif (1) ou d'une partie de celui-ci,
• une rotation du dispositif (1) ou d'une partie de celui-ci d'un angle supérieur à une valeur seuil prédéfinie,
• une rotation du dispositif (1) ou d'une partie de celui-ci autour d'un axe défini,
• une ou plusieurs rotations du dispositif (1) ou d'une partie de celui-ci sur une durée supérieure à une valeur seuil prédéfinie,
• une combinaison de rotations définies du dispositif (1) ou d'une partie de celui-ci, et/ou
• une combinaison de deux ou plusieurs des conditions de déclenchement mentionnées ci-dessus.

10. Dispositif (1) selon l'une quelconque des revendications 1 à 9, dans lequel l'unité de commande est configurée pour attribuer le signal à l'événement sur la base d'un profil d'événement prédéfini.

11. Dispositif (1) selon l'une quelconque des revendications 1 à 10, dans lequel le profil d'événement prédéfini indique un ou plusieurs des événements suivants :
• mouvement et/ou changement d'orientation et/ou de position du dispositif (1) ou d'une partie de celui-ci dû au vent,
• mouvement et/ou changement d'orientation et/ou de position du dispositif (1) ou d'une partie de celui-ci dû à la pluie,
• mouvement et/ou changement d'orientation et/ou de position du dispositif (1) ou d'une partie de celui-ci dû à de fortes pluies,
• mouvement et/ou changement d'orientation et/ou de position du dispositif (1) ou d'une partie de celui-ci dû à la grêle,
• mouvement et/ou changement d'orientation et/ou de position du dispositif (1) ou d'une partie de celui-ci dû au renversement du dispositif (1),
• mouvement et/ou changement d'orientation et/ou de position du dispositif (1) ou d'une partie de celui-ci dû à la chute du dispositif (1) ou de la partie de celui-ci,
• mouvement et/ou changement d'orientation et/ou de position du dispositif (1) ou d'une partie de celui-ci dû à une interaction du dispositif (1) ou de la partie de celui-ci avec un animal,
• mouvement et/ou changement d'orientation et/ou de position du dispositif (1) ou d'une partie de celui-ci dû à la maintenance du dispositif (1) ou de la partie de celui-ci,
• mouvement et/ou changement d'orientation et/ou de position du dispositif (1) ou d'une partie de celui-ci dû au nettoyage d'un récipient rempli de liquide destiné à immobiliser des arthropodes,
• mouvement et/ou changement d'orientation et/ou de position du dispositif (1) ou d'une partie de celui-ci dû au renouvellement ou au remplacement d'une surface adhésive destinée à immobiliser des arthropodes,
• mouvement et/ou changement d'orientation et/ou de position du dispositif (1) ou d'une partie de celui-ci dû au vol du dispositif (1) ou de la partie de celui-ci,
• mouvement et/ou changement d'orientation et/ou de position du dispositif (1) ou d'une partie de celui-ci dû au déplacement du dispositif (1) ou de la partie de celui-ci de sa position d'origine.

12. Dispositif (1) selon l'une quelconque des revendications 1 à 11, dans lequel l'unité de commande est configurée pour faire passer le dispositif (1) de l'état de repos à l'état actif lorsque le signal indique un événement de basculement extrême.

13. Dispositif (1) selon l'une quelconque des revendications 1 à 12, dans lequel l'unité de commande est configurée pour faire passer le dispositif (1) de l'état de repos à l'état actif et pour amener l'unité de transmission à transmettre une information au système informatique séparé, l'information indiquant une condition de déclenchement qui a provoqué le passage du dispositif (1) de l'état de repos à l'état actif et/ou l'information indiquant un événement auquel l'unité de commande a attribué le signal, et/ou l'information comprenant une demande à un utilisateur d'inspecter le dispositif (1).

14. Dispositif (1) selon l'une quelconque des revendications 1 à 13, dans lequel l'unité de commande est configurée pour faire passer le dispositif (1) de l'état de repos à l'état actif et pour déterminer une position du dispositif (1).

15. Dispositif (1) selon l'une quelconque des revendications 1 à 14, dans lequel l'unité de commande est configurée pour faire passer le dispositif (1) de l'état de repos à l'état actif, pour déterminer une position du dispositif (1) et pour amener l'unité de transmission à transmettre la position déterminée au système informatique séparé.

16. Dispositif (1) selon l'une quelconque des revendications 1 à 15, dans lequel l'unité de commande est configurée pour faire passer le dispositif (1) de l'état de repos à l'état actif, pour déterminer une position du dispositif (1), pour comparer la position déterminée avec une position de référence et pour transmettre la position déterminée à un système informatique séparé lorsque la position déterminée s'écarte de la position de référence.

17. Dispositif (1) selon l'une quelconque des revendications 1 à 16, dans lequel l'unité de commande est configurée pour stocker, en réponse à l'attribution du signal à un événement de nettoyage, une information indiquant qu'un nettoyage a eu lieu dans une mémoire de données.

18. Dispositif (1) selon l'une quelconque des revendications 1 à 17, dans lequel l'unité de commande est configurée pour enregistrer, en réponse à l'attribution du signal à un événement de nettoyage, le moment de l'événement de nettoyage et pour stocker le moment dans une mémoire de données.

19. Dispositif (1) selon l'une quelconque des revendications 1 à 18, dans lequel l'unité de commande est configurée pour faire passer le dispositif (1) de l'état de repos à l'état actif en réponse à l'attribution du signal à un événement de nettoyage, et pour transmettre une information indiquant qu'un nettoyage a eu lieu au système informatique séparé.

20. Dispositif (1) selon l'une quelconque des revendications 1 à 19, dans lequel l'unité de commande est configurée pour faire passer le dispositif (1) de l'état de repos à l'état actif en réponse à l'attribution du signal à un événement de nettoyage, et pour amener la caméra à capturer une image de la zone de collecte nettoyée.

21. Dispositif (1) selon l'une quelconque des revendications 1 à 20, dans lequel la zone de collecte fait partie d'un dispositif de piégeage pour arthropodes.
